# FASCICULE DE BREVET EUROPEEN

(11) **EP 2 715 071 B1**
(45) Date de publication et mention de la délivrance du brevet: **21.08.2019**
(21) Numéro de dépôt: 12731093.6
(22) Date de dépôt: 31.05.2012
(51) Int. Cl.: F01D 17/16

(54) **DISTRIBUTEUR DE TURBINE RADIALE À CALAGE VARIABLE, EN PARTICULIER DE TURBINE DE SOURCE DE PUISSANCE AUXILIAIRE**
LEITGITTERANORDNUNG MIT VARIABLER GEOMETRIE FÜR EINE RADIALTURBINE, INSBESONDERE FÜR EINE TURBINE EINES HILFSTRIEBWERKS
VARIABLE-PITCH NOZZLE FOR A RADIAL FLOW TURBINE, IN PARTICULAR FOR A TURBINE OF AN AUXILIARY POWER SOURCE

(30) Priorité: 01.06.2011 FR 1154801
(43) Date de publication de la demande: 09.04.2014
(73) Titulaire: Safran Helicopter Engines, 64510 Bordes (FR)
(72) Inventeur: DEMOLIS, Jacques, F-64140 Lons (FR); MINEL, Laurent, F-64000 Pau (FR); VIGNAU, Hubert, F-64800 Nay (FR)
(74) Mandataire: Gevers & Orès
(86) Numéro de dépôt international: PCT/FR2012/051217
(87) Numéro de publication internationale: WO 2012/164227

(56) Documents cités:
- EP-A2- 2 180 144
- DE-A1-102007 005 445
- US-A- 3 029 067
- US-A- 5 207 559

## Description

### DOMAINE TECHNIQUE

L'invention concerne un distributeur de turbine radiale à calage variable et plus particulièrement, mais non exclusivement, de turbine de turbomoteur ou de source de puissance auxiliaire.

Le domaine de l'invention est celui de la distribution des gaz dans les turbines de turbomachines et, plus particulièrement, l'adaptation du débit de fluide pour diminuer la consommation en carburant, en particulier sa consommation spécifique (en abrégé Cs) à charge partielle, et améliorer l'opérabilité des moteurs, en particulier des turbomoteurs ou des unités de puissance auxiliaires (en abrégé groupe APU). Par turbomachine, il convient de comprendre les turbomoteurs, les groupes de type APU et les turbocompresseurs.

Un groupe APU est une source d'énergie permettant notamment le démarrage des moteurs principaux des aéronefs et la fourniture d'énergie non propulsive (énergie de pressurisation de cabine, énergie électrique et/ou hydraulique). Certains groupes APU sécurisés peuvent également intervenir en vol en cas de panne d'un moteur pour tenter de le redémarrer et/ou pour fournir de l'énergie aux équipements.

Un turbomoteur ou un groupe APU se compose en général, d'une part, d'un simple ou double arbre primaire, sur lequel sont montés d'une part des étages de compresseur (haute et basse pression, ci-après HP et BP, pour un double-corps ou seulement HP pour un simple corps) et, d'autre part, de turbines (HP et BP ou seulement HP), et d'un arbre secondaire sur lequel est montée une turbine de puissance BP. La turbine de puissance est formée de disques à aubages mobiles et de disques à aubages fixes ou distributeur. Les turbines peuvent être radiales avec un écoulement centripète des gaz. Dans ce cas, l'aubage fixe est monté en périphérie de l'aubage mobile. Le distributeur permet de réguler l'écoulement des gaz par déviation à l'aide des aubages fixes.

Le compresseur et la turbine HP en liaison avec une chambre de combustion forment le générateur de gaz. En fonctionnement, l'air comprimé est mélangé au carburant dans la chambre pour provoquer la combustion. Les gaz d'échappement sont ensuite partiellement détendus dans la turbine HP (ou les turbines HP et BP) pour entraîner les compresseurs, puis dans la turbine de puissance via le distributeur.

La turbine de puissance est couplée à des moyens d'entraînement direct des équipements (compresseur de charge, pompes à carburant et hydraulique, générateur électrique et/ou démarreur/générateur électrique, etc.), ou via une boîte de transfert de puissance avec une adaptation des vitesses de rotation. Un prélèvement d'air en sortie du compresseur de charge ou du compresseur du turbomoteur peut servir au conditionnement d'air de la cabine et/ou au démarrage pneumatique des moteurs principaux.

### ÉTAT DE LA TECHNIQUE ANTÉRIEUR

Une turbomachine à géométrie fixe présente l'inconvénient d'avoir un rendement thermique peu attractif à charge partielle. En effet, la machine est classiquement conçue pour fonctionner de manière optimale dans des conditions proches de ses limites mécaniques et thermiques. Lorsqu'elle fournit une puissance très inférieure à ces points optimaux, le taux de compression et la température sont alors sensiblement inférieurs, de même, en général, que le rendement de compression. Ceci conduit à un rendement thermique très inférieur à celui du point nominal, et donc à une consommation spécifique - c'est-à-dire la consommation de carburant par unité de puissance - médiocre.

Une solution possible pour pallier cet effet est d'avoir recours à une géométrie variable. Dans ce cas, afin de diminuer le débit d'air traversant la machine sans trop diminuer le taux de compression ni la température de combustion, la section débitante de la turbine haute pression - située juste à l'aval de la chambre de combustion - est diminuée en utilisant des pales à calage variable pour le stator (appelé distributeur pour une turbine).

Il est également envisageable, sur un avion civil, de tirer partie de l'énergie de pression disponible dans la cabine pressurisée en installant une turbine au niveau de l'orifice d'éjection de l'air (l'air de la cabine étant renouvelé en permanence pour la sécurité des passagers, à une pression supérieure à la pression ambiante extérieure). L'orifice de sortie est en général une vanne de section variable, asservie au système de contrôle de la pression dans la cabine.

Une telle turbine doit pouvoir, tout comme une vanne classique, assurer un débit réduit variable qui sera fonction des consignes de pression élaborées pas le système de contrôle de la pression cabine, et de la différence de pression entre la cabine et l'extérieur (définissant le taux de détente de la turbine). Là aussi, un distributeur de turbine à section variable gérée par des pales de distributeur à calage variable est une solution.

Des turbines de l'art antérieur sont divulguées dans US 3 029 067 A et US 5 207 559 A.

### EXPOSE DE L'INVENTION

L'invention vise à améliorer la tenue mécanique des distributeurs et le rendement global du turbomoteur. Pour ce faire, elle propose de réaliser un distributeur selon la revendication 1, intégrant des pales à calage variable pour réguler et piloter le débit de gaz, chaque pale pouvant être entraînée en rotation selon un positionnement particulier. Afin d'améliorer les performances du distributeur, l'étanchéité entre les pales du distributeur et le système de calage de celles-ci, est faite dans la zone de charge maximale des pales du distributeur. Cette étanchéité permet alors de limiter les écoulements de jeu parasites dans la zone où ils seraient les plus intenses.

Plus précisément, l'invention a pour objet un distributeur de turbine radiale de turbomachine, en rotation autour d'un axe central, et comportant une première grille annulaire de pales fixes et une deuxième grille annulaire de même nombre de pales à calage variable, les pales présentant des faces intrados et extrados. Chaque pale de la deuxième grille, solidaire de coupelles s'étendant à chaque extrémité de pale en regard des faces intrados et extrados de la pale, est apte à être entraînée en rotation par des moyens de commande de calage autour d'un axe géométrique central reliant les centres des coupelles. Chacune de ces pales possède un bord de fuite et un bord d'attaque des flux de gaz en liaison avec les faces extrados et intrados, le bord d'attaque de chaque pale à calage variable pouvant avantageusement être situé sensiblement dans le sillage d'une pale fixe pour orienter des flux de gaz radialement vers l'axe central de rotation de la turbine. Chaque pale à calage variable est montée à distance de l'axe des coupelles de sorte que cet axe de rotation est positionné en regard de la face extrados de la pale et de manière sensiblement plus proche du bord de fuite que du bord d'attaque de chaque pale.

Dans ces conditions, les pales sont montées sur les coupelles là où la charge aérodynamique est la plus élevée du fait de la différence de pression maximale entre les faces intrados et extrados de la pale.

L'incidence des flux d'air est adaptée par les moyens de commande de calage des pales pour permettre une adéquation entre le débit d'air demandé par le point de fonctionnement et le débit passant dans la turbine en fonction de cette demande. Une telle adaptation induit certes une perte de rendement et de performance de la turbine prise isolément - puisque réduits par cette adéquation - mais conduit à une optimisation du cycle thermodynamique de la turbomachine. Dans le cas particulier du turbomoteur, la consommation spécifique est réduite par adéquation du débit.

Selon l'invention le bord d'attaque de chaque pale à calage variable possède une épaisseur sensiblement supérieure à celle du bord de fuite et une forme aérodynamique de courbure optimisée pour l'absorption d'un sillage d'air généré par la pale de la grille fixe en regard. En particulier, l'épaisseur moyenne de la partie de pale à calage variable entre les coupelles de montage est sensiblement inférieure à l'épaisseur du reste de la pale située du côté du bord d'attaque. Par ailleurs, les pales pivotent entre deux positions extrêmes autour d'une position de référence correspondant à 100% de la section de passage aérodynamique : une position fermée de coupure de flux d'air, correspondant à 0% de la section de passage de référence, et une position ouverte d'ouverture maximale de flux d'air, correspondant à 150% de la section de passage de référence.

De manière avantageuse, les pales à calage fixe présentent une épaisseur suffisante pour assurer le passage des efforts structuraux. Un passage adéquat des efforts structuraux permet de limiter les jeux et les désalignements entre les coupelles et les carters, et donc de limiter les dégradations de performance.

### BREVE DESCRIPTION DES FIGURES

D'autres caractéristiques et avantages de l'invention ressortiront à la lecture de la description qui suit, en référence aux figures annexées qui représentent, respectivement :
- la figure 1, une vue schématique en coupe axiale partielle d'un exemple de groupe APU équipé d'un distributeur selon l'invention ;
- la figure 2, une vue en perspective de la turbine avec le distributeur monté sur un premier flasque ;
- les figures 3a et 3b, des vues en coupe partielle du distributeur selon l'invention, respectivement dans un plan de roue et dans un plan longitudinal de la turbine le long de son axe de rotation ;
- la figure 4, un diagramme de la pression statique exercée sur les faces intrados et extrados en fonction de l'abscisse curviligne d'une pale, et
- la figure 5, une vue de pales de distributeur dans un plan de roue selon la position de pivotement de référence et de différentes positions.

### DESCRIPTION DETAILLEE D'UN EXEMPLE DE REALISATION

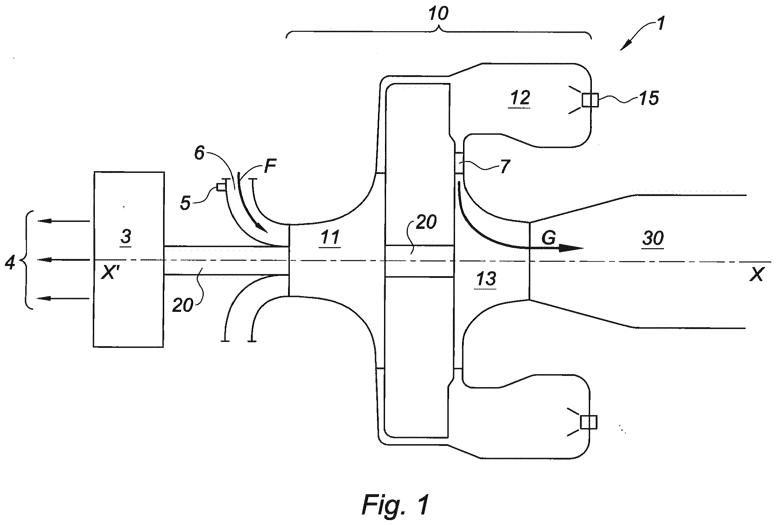

En référence à la vue générale schématique de la figure 1, un exemple de groupe APU 1 comporte un générateur de gaz 10 composé d'un compresseur centrifuge 11, d'une chambre de combustion 12 et d'une turbine 13, la turbine entraînant en rotation le compresseur via un arbre de transmission 20 autour de l'axe central X'X. Les gaz en sortie de la chambre sont détendus dans la turbine 13 qui fournit également de la puissance aux équipements. Les gaz résiduels sortent ensuite par une tuyère d'échappement 30.

Cette puissance est délivrée via un arbre traversant 20 à une boîte d'accessoires 3 connectée à cet arbre 20. La boîte d'accessoires 3 entraîne par des moyens appropriés d'adaptation de vitesse (pignons, renvois, etc.) les accessoires moteur du groupe APU et des équipements auxiliaires 4 propres au fonctionnement de l'aéronef : alternateur, injecteur, pompe carburant, compresseur de charge, pompe hydraulique, etc.

En fonctionnement, un régulateur d'admission 5 ajuste le débit d'air F provenant d'une entrée d'air 6 pour être comprimé dans le compresseur 11. L'air comprimé est mélangé au carburant dans un injecteur 15 équipant la chambre 12. Après détente dans la turbine 13, les gaz G sont éjectés dans la tuyère 30.

Dans l'exemple illustré, la turbine de puissance 13 est une turbine liée. Dans d'autres exemples, la turbine de puissance peut être une turbine libre ou une autre turbine d'un équipement annexe, en liaison avec la boîte d'accessoires 3.

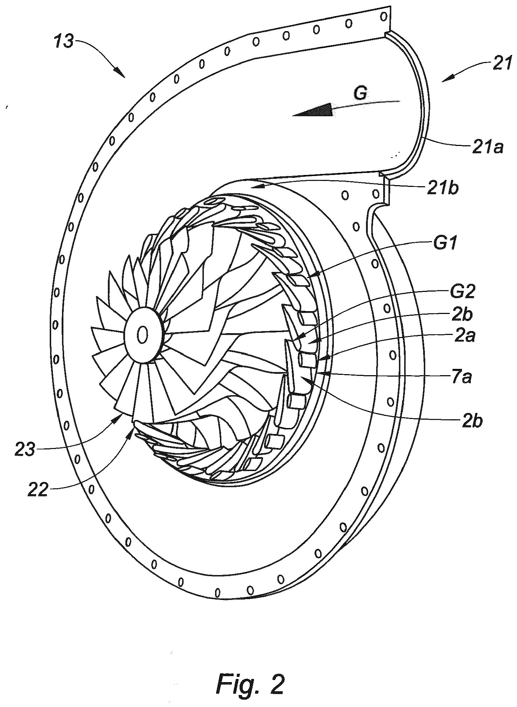

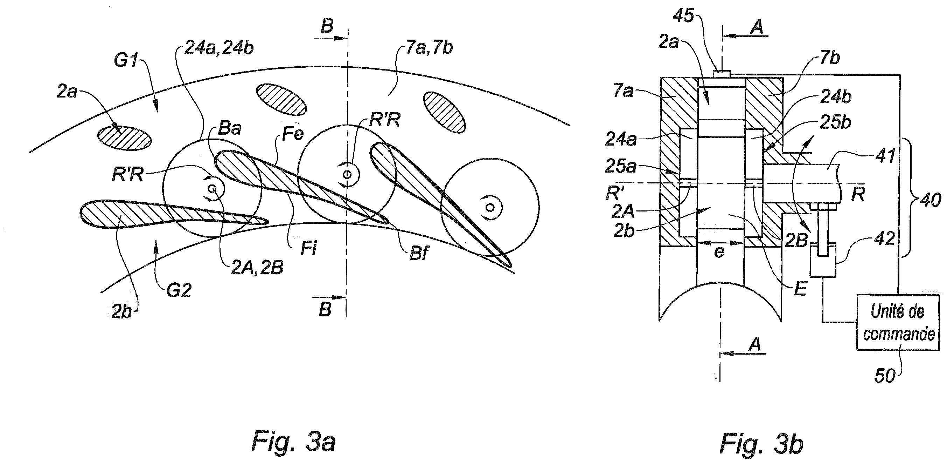

La turbine 13 est plus précisément illustrée sur la vue en perspective de la figure 2. Cette turbine centripète comporte un rouet mobile 22 équipé d'ailettes 23 et un distributeur fixe 7 monté à la périphérie du rouet 22 sur des carters appropriés, seul le carter 7a étant représenté sur cette figure 2 (voir les carters 7a et 7b de la figure 3b).

La turbine radiale 13 est équipée d'une volute 21 - une demi-volute est visible sur la figure - dont le diamètre diminue entre son entrée 21a et son extrémité 21b sur les ailettes 23. Cette volute permet de générer une composante tangentielle de l'écoulement d'air, ce qui permet de limiter la déviation de l'écoulement que réalise le distributeur pour alimenter la roue 22.

Selon l'invention, le distributeur 7 comporte deux grilles de pales, une première grille périphérique G1 à pales fixes 2a, de maintien du parallélisme des parois, et une deuxième grille G2 à pales orientables 2b, d'ajustement de la section de passage. Les flux d'air viennent ensuite entraîner en rotation les ailettes 23 et l'arbre 20 solidaire du rouet 22.

Les figures 3a et 3b, selon les coupes respectives BB et AA, illustrent l'organisation des grilles G1 et G2, et de leurs pales fixes 2a et orientables 2b, dans l'espace séparant les deux carters de montage 7a et 7b. Les pales fixes 2a sont solidaires des carters 7a et 7b. Elles définissent par leur envergure l'écart «e » entre ces carters, en d'autres termes la largeur de l'espace e entre les carters parallèles 7a et 7b. Les pales 2a présentent avantageusement une épaisseur suffisante pour assurer le passage des efforts structuraux entre les carters 7a et 7b.

Les extrémités de chaque pale 2b sont solidarisées à des coupelles circulaires et parallèles 24a et 24b, agencées dans des logements en regard 25a et 25b formés dans les carters 7a et 7b. Le montage des pales 2b est réalisé à distance de l'axe géométrique de rotation R'R traversant les coupelles 24a et 24b en leur centre 2A et 2B. Les coupelles sont ici perpendiculaires aux faces intrados et extrados de chaque pale 2b, Fi et Fe.

Chaque pale 2b est apte à être entraînée en rotation autour de l'axe géométrique R'R par des moyens de commande 40 de calage variable des pales, en particulier pendant les phases transitoires de l'aéronef. Ces moyens de commande comportent une tige 41 solidaire de la coupelle 24b couplée à des liaisons mécaniques (bras, pignons, paliers) en liaison avec des actionneurs 42 électriques ou électromagnétiques. Un seul actionneur peut être configuré pour toutes les pales.

**Le** ou les actionneurs sont pilotés par une unité centrale de commande moteur 50. La commande peut être numérique, électronique ou hydromécanique. L'incidence des flux d'air défini par l'orientation des pales 2b est adaptée par les moyens de commande 40 pour permettre un ajustement en débit. Dans l'exemple illustré, un capteur de pression 45 fournit des données à l'unité centrale 50 qui régule l'ouverture et la fermeture des pales 2b du distributeur 7 via les moyens de commande 40.

Chacune de ces pales 2b possède un bord de fuite Bf et un bord d'attaque Ba de flux d'air, en liaison avec les faces Fi et Fe de la pale 2b. Le bord d'attaque Ba de chaque pale 2b de la deuxième grille est situé sensiblement dans le sillage d'une pale fixe 2a de la première grille, pour orienter les flux d'air radialement vers l'axe central de rotation X'X de la turbine 22. Le sillage d'une pale fixe correspond à la trace aérodynamique qu'elle laisse dans un écoulement sain. Ce sillage définit une zone de faible vitesse fortement perturbée.

Chaque pale 2b est montée hors d'axe R'R et décentrée de sorte que l'axe de rotation R'R est positionné en regard de la face extrados Fe de la pale 2b, et de manière sensiblement plus proche du bord de fuite Bf que du bord d'attaque Ba de chaque pale 2b.

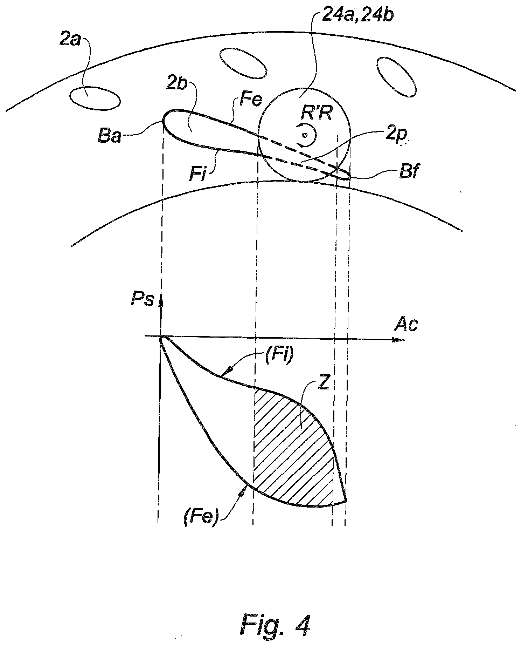

**Dans** ces conditions, les coupelles 24a et 24b sont positionnées là où la charge aérodynamique est la plus élevée du fait de la différence de pressions maximale entre les faces intrados et extrados de la pale. La figure 4 illustre la variation de pression statique Ps en fonction de l'abscisse curviligne Ac correspondant à chacune des faces Fi et Fe d'une pale 2b.

Un maximum de variation de pression se situe alors dans la zone Z hachurée, dans la partie de pale 2p située à l'intérieur d'un espace « e » délimité par les coupelles, du côté du bord de fuite Bf de la pale 2b. Les coupelles suppriment le jeu dans la zone Z où l'effet de jeu est le plus important. Le choix optimisé de la position de l'axe de rotation R'R, déporté vers le bord de fuite Bf, permet de limiter les débattements du bord de fuite Bf lui-même vis-à-vis de sa position par rapport au bord d'attaque des ailettes 23 de la turbine 22, tout en limitant le couple mécanique nécessaire pour contrecarrer le couple aérodynamique lié à la pale et donc d'optimiser l'absorption des contraintes aéromécaniques.

Le bord d'attaque Ba de chaque pale 2b possède une épaisseur sensiblement plus importante que le bord de fuite Bf, et une forme aérodynamique de courbure optimisée pour l'absorption d'un sillage d'air généré par la pale de la grille fixe en regard. En particulier, l'épaisseur moyenne de la partie de pale 2p (en traits pointillés sur la figure) entre les parties des faces intrados Fi et extrados Fe, est sensiblement inférieure à l'épaisseur du reste de la pale 2b située du côté du bord d'attaque Ba.

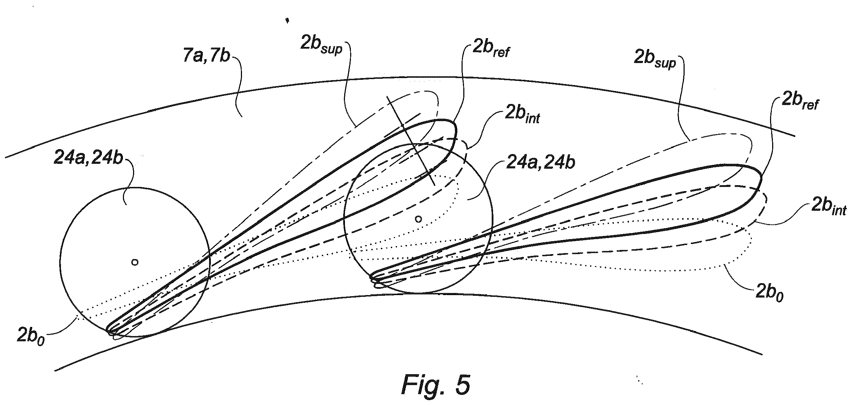

La rotation des pales 2b est avantageusement limitée par une amplitude de pivotement entre deux positions extrêmes. La figure 5 illustre les positions extrêmes 2bₛᵤₚ et 2b₀ autour d'une position de référence 2b_{ref} correspondant à 100% de la section de passage aérodynamique. La position extrême 2b₀ correspond à la fermeture complète de la section de passage. La position 2b_{inf} correspond à une position fermée, avec 70 % de la section de passage de référence, destinée aux faibles demandes de charge. La position 2bₛᵤₚ correspond à la position ouverte, avec 150% de la section de passage de référence, destinée aux plus fortes demandes de charge.

L'invention n'est pas limitée aux exemples décrits et représentés et n'est définie que par les revendications annexées. Il est par exemple possible d'effectuer le calage des pales mobiles par un réglage uniquement mécanique, individuel ou centralisé, ou par commande électrique, électronique avec ou sans régulation numérique.

## Revendications

1. Distributeur de turbine radiale de turbomachine (7), en rotation autour d'un axe central (X'X), comportant une première grille annulaire (G1) de pales fixes (2a) et une deuxième grille annulaire (G2) de même nombre de pales à calage variable (2b), les pales (2a, 2b) présentant des faces intrados (Fi) et extrados (Fe), chaque pale (2b) de la deuxième grille, solidaire de coupelles (24a, 24b) s'étendant à chaque extrémité de pale (2b), étant apte à être entraînée en rotation par des moyens de commande (40) autour d'un axe géométrique (R'R) reliant les centres (2A, 2B) des coupelles (24a, 24b), et chacune de ces pales (2b) possédant un bord de fuite (Bf) et un bord d'attaque (Ba) des flux de gaz (G) en liaison avec les faces extrados (Fe) et intrados (Fi), dans lequel chaque pale à calage variable (2b) est montée à distance de l'axe (R'R) des coupelles (24a, 24b) de sorte que cet axe de rotation (R'R) est positionné en regard de la face extrados (Fe) de la pale (2b) et de manière sensiblement plus proche du bord de fuite (Bf) que du bord d'attaque (Ba) de cette pale (2b), et dans lequel le bord d'attaque (Ba) de chaque pale à calage variable (2b) possède une épaisseur sensiblement supérieure à celle du bord de fuite (Bf) et une forme aérodynamique de courbure optimisée pour l'absorption d'un sillage d'air généré par la pale (2a) de la grille fixe (G1) en regard.

2. Distributeur de turbine radiale selon la revendication 1, dans lequel le bord d'attaque (Ba) de chaque pale à calage variable (2b) est situé sensiblement dans le sillage d'une pale fixe (2a) pour orienter des flux de gaz (G) radialement vers l'axe central de rotation de la turbine (X'X).

3. Distributeur de turbine radiale selon l'une quelconque des revendications précédentes, dans lequel l'épaisseur moyenne de la partie de pale à calage variable (2p) entre les coupelles de montage (24a, 24b) est sensiblement inférieure à l'épaisseur du reste de la pale (2b) située du côté du bord d'attaque (Ba).

4. Distributeur de turbine radiale selon l'une quelconque des revendications précédentes, dans lequel les pales à calage variable (2b) sont aptes à pivoter entre deux positions extrêmes (2b₀, 2bₛᵤₚ) autour d'une position de référence (2b_{ref}) correspondant à 100% de la section de passage aérodynamique, une position fermée (2b₀) de coupure de flux d'air, correspondant à 0% de la section de passage de référence (2b_{ref}), et une position ouverte (2bₛᵤₚ) d'ouverture maximale de flux d'air, correspondant à 150% de la section de passage de référence (2b_{ref}).

5. Distributeur de turbine radiale selon l'une quelconque des revendications précédentes, dans lequel les pales à calage fixe (2a) présentent une épaisseur apte à assurer le passage des efforts structuraux.

6. Turbine radiale (13) comprenant un distributeur de turbine radiale selon l'une quelconque des revendications précédentes et un rouet mobile (22) équipé d'ailettes (23), **caractérisée en ce que** la turbine radiale (13) est équipée d'une volute (21) dont le diamètre diminue entre son entrée (21a) et son extrémité (21b) sur les ailettes (23).

7. Turbine radiale de turbomoteur comportant un distributeur selon l'une quelconque des revendications 1 à 5.

8. Turbine radiale de source de puissance auxiliaire d'aéronef comportant un distributeur selon l'une quelconque des revendications 1 à 5.

9. Turbine radiale de turbocompresseur comportant un distributeur selon l'une quelconque des revendications 1 à 5.

## Patentansprüche

1. Verteiler für eine Radialturbine eines Turbostrahltriebwerks (7), in Drehung um eine zentrale Achse (X'X), ein erstes ringförmiges Gitter (G1) mit feststehenden Schaufeln (2a) und ein zweites ringförmiges Gitter (G2) mit derselben Anzahl an Schaufeln mit variabler Feststellposition (2b) beinhaltend, wobei die Schaufeln (2a, 2b) Druckseiten (Fi) und Saugseiten (Fe) aufweisen, wobei jede Schaufel (2b) des zweiten Gitters, die fest mit Platten (24a, 24b) verbunden ist, die sich an jedem Ende der Schaufel (2b) erstrecken, imstande ist, durch Steuermittel (40) um eine geometrische Achse (R'R), die die Zentren (2A, 2B) der Platten (24a, 24b) verbindet, in Drehung versetzt zu werden, und jede dieser Schaufeln (2b) eine Abströmkante (Bf) und eine Angriffskante (Ba) der Gasströme (G) in Verbindung mit der Saugseite (Fe) und Druckseite (Fi) besitzt, wobei jede Schaufel mit variabler Feststellposition (2b) auf Abstand zu der Achse (R'R) der Platten (24a, 24b) montiert ist, sodass diese Drehachse (R'R) gegenüber der Saugseite (Fe) der Schaufel (2b) und im Wesentlichen näher zu der Abströmkante (Bf) als zu der Angriffskante (Ba) dieser Schaufel (2b) positioniert ist, und wobei die Angriffskante (Ba) jeder Schaufel mit variabler Feststellposition (2b) eine Dicke im Wesentlichen größer als jene der Abströmkante (Bf) und eine optimierte aerodynamische Krümmungsform für die Absorption einer Luftwirbelschleppe, die durch die feststehende Schaufel (2a) des Gitters (G1) gegenüber erzeugt wird, besitzt.

2. Verteiler für eine Radialturbine nach Anspruch 1, wobei sich die Angriffskante (Ba) jeder Schaufel mit variabler Feststellposition (2b) im Wesentlichen in der Wirbelschleppe einer feststehenden Schaufel (2a) zum Ausrichten der Gasströme (G) radial zur zentralen Drehachse der Turbine (X'X) befindet.

3. Verteiler für eine Radialturbine nach einem der vorstehenden Ansprüche, wobei die mittlere Dicke des Schaufelabschnitts mit variabler Feststellposition (2p) zwischen den Montageplatten (24a, 24b) im Wesentlichen geringer ist als die Dicke des Rests der Schaufel (2b), die sich auf Seiten der Angriffskante (Ba) befindet.

4. Verteiler für eine Radialturbine nach einem der vorstehenden Ansprüche, wobei die Schaufeln mit variabler Feststellposition (2b) imstande sind, zwischen zwei Extrempositionen (2b₀, 2bₛᵤₚ), um eine Referenzposition (2b_{ref}), die 100 % der aerodynamischen Durchgangssektion entspricht, einer geschlossenen Position (2b₀) zum Unterbrechen eines Luftstroms, die 0 % der Referenzdurchgangssektion (2b_{ref}) entspricht, und einer offenen Position (2bₛᵤₚ) zur maximalen Öffnung eines Luftstroms, die 150 % der Referenzdurchgangssektion (2b_{ref}) entspricht, zu schwenken.

5. Verteiler für eine Radialturbine nach einem der vorstehenden Ansprüche, wobei die Schaufeln mit fester Feststellposition (2a) eine Dicke aufweisen, die imstande ist, für den Durchgang der strukturellen Kräfte zu sorgen.

6. Radialturbine (13), einen Verteiler für eine Radialturbine nach einem der vorstehenden Ansprüche und ein bewegliches Laufrad (22) umfassend, das mit Rippen (23) ausgerüstet ist, **dadurch gekennzeichnet, dass** die Radialturbine (13) mit einer Schnecke (21) ausgerüstet ist, deren Durchmesser zwischen ihrem Eintritt (21a) und ihrer Extremität (21b) auf den Rippen (23) abnimmt.

7. Radialturbine eines Turbostrahltriebwerks, einen Verteiler nach einem der Ansprüche 1 bis 5 beinhaltend.

8. Radialturbine eines Hilfstriebwerks eines Flugzeugs, einen Verteiler nach einem der Ansprüche 1 bis 5 beinhaltend.

9. Radialturbine eines Turbokompressors, einen Verteiler nach einem der Ansprüche 1 bis 5 beinhaltend.

## Claims

1. Radial turbine nozzle for a turbine engine (7), rotating about a central axis (X'X), comprising a first annular array (G1) of fixed blades (2a) and a second annular array (G2) with the same number of variable-pitch blades (2b), the blades (2a, 2b) having pressure (Fi) and suction (Fe) faces, each blade (2b) of the second array, rigidly connected to cups (24a, 24b) extending at each end of the blade (2b), being capable of being driven in rotation by control means (40) about a geometric axis (R'R) connecting the centres (2A, 2B) of the cups (24a, 24b), and each of these blades (2b) having a trailing edge (Bf) and a leading edge (Ba) of the gas streams (G) linked to the suction (Fe) and pressure (Fi) faces, wherein each variable-pitch blade (2b) is mounted at a distance from the axis (R'R) of the cups (24a, 24b) such that this axis of rotation (R'R) is positioned facing the suction face (Fe) of the blade (2b) and substantially closer to the trailing edge (Bf) than the leading edge (Ba) of this blade (2b), and wherein the leading edge (Ba) of each variable-pitch blade (2b) has a thickness substantially greater than that of the trailing edge (Bf) and an aerodynamic curved shape optimised for absorption of a wake of air generated by the blade (2a) of the fixed array (G1) facing it.

2. Radial turbine nozzle according to claim 1, wherein the leading edge (Ba) of each variable-pitch blade (2b) is located substantially in the wake of a fixed blade (2a) to guide the gas streams (G) radially towards the central axis of rotation of the turbine (X'X).

3. Radial turbine nozzle according to any one of the preceding claims, wherein the average thickness of the portion of variable-pitch blade (2p) between the mounting cups (24a, 24b) is substantially less than the thickness of the remainder of the blade (2b) located on the leading edge side (Ba).

4. Radial turbine nozzle according to any one of the preceding claims, wherein the variable-pitch blades (2b) are capable of pivoting between two extreme positions (2b₀, 2bₛᵤₚ) about a reference position (2b_{ref}) corresponding to 100% of the aerodynamic flow area, a closed position (2b₀) cutting off the air stream, corresponding to 0% of the reference flow area (2b_{ref}), and an open position (2bₛᵤₚ) of maximum air-stream opening, corresponding to 150% of the reference flow area (2b_{ref}).

5. Radial turbine nozzle according to any one of the preceding claims, wherein the fixed-pitch blades (2a) are thick enough to ensure the transmission of structural loads.

6. Radial turbine (13) comprising a radial turbine nozzle according to any one of the preceding claims and a mobile spinning wheel (22) fitted with vanes (23), **characterised in that** the radial turbine (13) is fitted with a volute (21), the diameter of which decreases between the inlet (21a) thereof and the end (21b) thereof on the vanes (23).

7. Radial turbine of a turboshaft comprising a nozzle according to any one of claims 1 to 5.

8. Radial turbine of an auxiliary power source of an aircraft comprising a nozzle according to any one of claims 1 to 5.

9. Radial turbine of a turbocharger comprising a nozzle according to any one of claims 1 to 5.
